# EUROPÄISCHE PATENTSCHRIFT

(11) **EP 3 412 130 B1**
(45) Veröffentlichungstag und Bekanntmachung des Hinweises auf die Patenterteilung: **12.08.2020**
(21) Anmeldenummer: 17175381.7
(22) Anmeldetag: 09.06.2017
(51) Int. Cl.: A01D 34/00, A01B 79/00

(54) **VERFAHREN ZUM BETREIBEN EINES AUTONOMEN MOBILEN RASENMÄHROBOTERS UND RASENMÄHSYSTEM**
METHOD FOR OPERATING AN AUTONOMOUS MOBILE MOWER ROBOT AND MOWING SYSTEM
PROCÉDÉ DE FONCTIONNEMENT D'UN ROBOT TONDEUR MOBILE ET AUTONOME ET SYSTÈME DE TONDEUSE

(43) Veröffentlichungstag der Anmeldung: 12.12.2018
(73) Patentinhaber: Andreas Stihl AG & Co. KG, 71336 Waiblingen (DE)
(72) Erfinder: Gorenflo, Ernst, 74906 Bad Rappenau (DE); Ritzer, Peter, 6341 Ebbs (AT)
(74) Vertreter: Patentanwälte Ruff, Wilhelm, Beier, Dauster & Partner mbB

(56) Entgegenhaltungen:
- EP-A1- 2 767 150
- EP-A1- 3 106 013
- WO-A1-2016/108104
- US-A1- 2017 020 064

## Beschreibung

### ANWENDUNGSGEBIET UND STAND DER TECHNIK

Die Erfindung bezieht sich auf ein Verfahren zum Betreiben eines autonomen mobilen Rasenmähroboters und ein Rasenmähsystem mit einem solchen autonomen mobilen Rasenmähroboter.

Bekannt ist ein Rasenmähroboter mit einem Schneidwerkzeug, dessen Schnitthöhe einstellbar ist. Ein Rasenmähsystem gemäß dem Oberbegriff des Anspruchs 10 ist aus der Druckschrift US-A1-2017/0020064 bekannt.

### AUFGABE UND LÖSUNG

Der Erfindung liegt als Aufgabe die Bereitstellung eines Verfahrens zum Betreiben eines autonomen mobilen Rasenmähroboters und die Bereitstellung eines Rasenmähsystems mit einem solchen autonomen mobilen Rasenmähroboter zugrunde, wobei das Verfahren und das Rasenmähsystem verbesserte Eigenschaften und/oder verbesserte Funktionalitäten aufweisen.

Die Erfindung löst die Aufgabe durch die Bereitstellung eines Verfahrens zum Betreiben eines autonomen mobilen Rasenmähroboters mit den Merkmalen des Anspruchs 1 und eines Rasenmähsystems mit den Merkmalen des Anspruchs 10. Vorteilhafte Weiterbildungen und/oder Ausgestaltungen der Erfindung sind in den abhängigen Ansprüchen beschrieben.

Das erfindungsgemäße Verfahren zum Betreiben eines autonomen mobilen Rasenmähroboters mit einem Schneidwerkzeug zum Mähen eines Rasens, wobei eine Schnitthöhe des Schneidwerkzeugs einstellbar und/oder verstellbar ist, weist die Schritte auf: a) Empfangen, insbesondere automatisches Empfangen, einer Vorhersage und/oder Prognose eines umweltzustandsbeschreibenden Parameters. b) automatisches Einstellen der Schnitthöhe des Schneidwerkzeugs in Abhängigkeit von der empfangenen Vorhersage.

Das Verfahren ermöglicht die Schnitthöhe des Schneidwerkzeugs bereits vor dem Eintreten eines zukünftigen Umwelzustands, der mit dem umweltzustandsbeschreibenden Parameter beschrieben wird oder ist, in Abhängigkeit von der empfangenen Vorhersage einzustellen. Das Verfahren kann es ermöglichen, eine Auswirkung des zukünftigen Umweltzustands auf den Rasen bereits in der Gegenwart zu berücksichtigen und optional zu kompensieren, indem die Schnitthöhe des Schneidwerkzeugs in Abhängigkeit von der empfangenen Vorhersage des umweltzustandsbeschreibenden Parameters eingestellt wird.

Der Rasen kann als Grasfläche und/oder Wiese bezeichnet werden.

Der autonome mobile Rasenmähroboter kann dazu ausgebildet sein, sich auf dem zu bearbeitenden Rasen, der vorgegeben und/oder begrenzt sein kann, und/oder in seiner Umgebung selbstständig, selbsttätig, selbstbestimmt, selbstgesteuert und/oder unabhängig von einem Benutzer zu bewegen und/oder zu agieren und/oder zumindest einen Parameter, wie insbesondere einen Streckenparameter, und/oder einen Umkehrpunkt auszuwählen. Der autonome mobile Rasenmähroboter kann zusätzlich oder alternativ dazu ausgebildet sein, selbstständig mit dem Mähen zu beginnen und/oder das Mähen zu beenden. Der autonome mobile Rasenmähroboter braucht nicht durch den Benutzer gesteuert sein, insbesondere nicht ferngesteuert. In anderen Worten: der autonome mobile Rasenmähroboter kann insbesondere ohne menschliche Steuerung und/oder Führung mähen. Der autonome mobile Rasenmähroboter kann als Serviceroboter und/oder Dienstleistungsroboter und/oder Gartengerät bezeichnet werden.

Vorteilhafterweise kann das Schneidwerkzeug zum Mähen und/oder Schneiden von Gras, krautigen Pflanzen, holzigem Gestrüpp oder kleineren Gehölzen ausgebildet sein. Insbesondere kann das Schneidwerkzeug ein rotierendes Schneidwerkzeug und dazu ausgebildet sein, das zu mähende Gut im sogenannten Freischnittverfahren ohne Gegenschneide zu mähen. Vorteilhafterweise kann das Schneidwerkzeug mindestens einen Mähfaden, mindestens ein Kunststoffmesser, mindestens ein Metallmesser und/oder ein Metallschneideblatt mit mindestens einer Schneidkante und/oder mit mindestens einem Schneidezahn umfassen.

Die Schnitthöhe des Schneidwerkzeugs kann eine vertikale und/oder senkrechte Distanz zwischen einem Untergrund, auf dem sich der autonome mobile Rasenmähroboter bewegen kann, und dem Schneidwerkzeug sein, insbesondere einer durch das Schneidwerkzeug definierten Schnittebene. Vorteilhafterweise kann der autonome mobile Rasenmähroboter Laufräder zum Bewegen auf dem Untergrund aufweisen und die Schnitthöhe kann eine vertikale Distanz zwischen den Laufrädern und dem Schneidwerkzeug sein. Insbesondere kann die Schnitthöhe in einem Bereich zwischen 0 Zentimeter (cm) bis 15 cm liegen, insbesondere in einem Bereich von 2 cm bis 10 cm. Die Schnitthöhe des Schneidwerkzeugs kann stufenlos oder in relativ kleinen Schritten, insbesondere in 0,5 cm-Schritten, einstellbar sein.

Vorteilhafterweise kann der umweltzustandsbeschreibende Parameter ein für den Rasen, insbesondere dessen Wachstum, relevanter Parameter sein. Das Wachstum des Rasens kann von dem Umweltzustand beeinflusst und/oder abhängig sein.

Das Empfangen einer Vorhersage kann ein Abrufen der Vorhersage über ein Netzwerk sein, insbesondere über ein Datennetzwerk wie das Internet. Die Vorhersage kann eine zukünftige Vorhersage für die nächsten Stunden oder Tage sein, insbesondere für die kommenden drei bis fünf Tage. Vorteilhafterweise kann das Empfangen in regelmäßigen Zeitabständen wiederholt erfolgen.

Automatisches Einstellen der Schnitthöhe des Schneidwerkzeugs kann bedeuten, dass die Schnitthöhe des Schneidwerkzeugs ohne menschlichen Eingriff eingestellt werden kann.

Der Schritt b) kann zeitgleich mit dem Schritt a) und/oder zeitlich nach diesem ausgeführt werden.

Das Einstellen der Schnitthöhe des Schneidwerkzeugs in Abhängigkeit von der empfangenen Vorhersage des umweltzustandsbeschreibenden Parameters kann derart sein, dass wenn die Vorhersage ein zukünftig verstärktes Rasenwachstum erwarten lässt, eine relativ niedrigere Schnitthöhe eingestellt wird, oder wenn die Vorhersage ein zukünftig geringeres Rasenwachstum erwarten lässt, eine relativ höhere Schnitthöhe eingestellt wird.

In einer Weiterbildung der Erfindung umfasst der umweltzustandsbeschreibende Parameter einen meteorologischen Parameter, insbesondere eine Lufttemperatur, eine Luftfeuchtigkeit, einen Taupunkt, einen Luftdruck, eine Luftdichte, eine Luftzusammensetzung, eine Windrichtung, eine Windgeschwindigkeit, eine Niederschlagsart, eine Niederschlagsmenge, eine Bewölkung, eine Sichtweite, eine Globalstrahlung, eine Albedo und/oder eine Jahreszeit. Die Vorhersage kann als Wettervorhersage bezeichnet werden. Zusätzlich oder alternativ kann der umweltzustandsbeschreibende Parameter einen bodenzustandsbeschreibenden Parameter umfassen, insbesondere eine Bodenfeuchtigkeit, eine Bodenzusammensetzung, eine Bodentemperatur, einen Boden-pH-Wert und/oder einen Bodendüngezustand.

In einer Weiterbildung der Erfindung weist das Verfahren einen Schritt auf: Empfangen, insbesondere automatisches Empfangen, einer Vergangenheit des umweltzustandsbeschreibenden Parameters und/oder einer Gegenwart des umweltzustandsbeschreibenden Parameters. Zeitgleich und/oder zeitlich danach umfasst der Schritt b): automatisches Einstellen der Schnitthöhe des Schneidwerkzeugs in Abhängigkeit von der empfangenen Vergangenheit und/oder von der empfangenen Gegenwart. Indem die Vergangenheit und/oder die Gegenwart des umweltzustandsbeschreibenden Parameters berücksichtigt wird, kann ein zukünftiges Rasenwachstum relativ genauer abgeschätzt werden und/oder die Schnitthöhe des Schneidwerkzeugs relativ besser eingestellt werden.

In einer Weiterbildung der Erfindung weist das Verfahren einen Schritt ab) auf: Ermitteln, insbesondere automatisches Ermitteln, einer zukünftigen Rasenhöhe des Rasens basierend auf dem umweltzustandsbeschreibenden Parameter mittels eines Rasenwachstumsmodells. Zeitgleich und/oder zeitlich danach umfasst der Schritt b): automatisches Einstellen der Schnitthöhe des Schneidwerkzeugs in Abhängigkeit von der ermittelten zukünftigen Rasenhöhe. Die zukünftige Rasenhöhe kann eine Rasenhöhe sein, die der Rasen in den kommenden drei oder fünf Tagen voraussichtlich erreichen wird. Das Ermitteln kann ein Bestimmen und/oder ein Berechnen umfassen. Insbesondere kann das Rasenwachstumsmodell eine Tabelle, eine mathematische Formel, eine auf Erfahrungswerten basierende Abschätzung und/oder eine Simulation umfassen. Der umweltzustandsbeschreibende Parameter kann als eine Eingangsgröße des Rasenwachstumsmodells bezeichnet werden und/oder die zukünftige Rasenhöhe kann als eine Ausgangsgröße des Rasenwachstumsmodells bezeichnet werden. Vorteilhafterweise kann die Auswirkung des umweltzustandsbeschreibenden Parameters auf den Rasen oder seine Rasenhöhe mittels des Rasenwachstumsmodells relativ genau ermittelt werden. Eine genaue Ermittlung der zukünftigen Rasenhöhe oder eines Zugewinns an Rasenhöhe ist für das Einstellen der Schnitthöhe vorteilhaft.

In einer Ausgestaltung der Erfindung weist das Verfahren einen Schritt auf: Erfassen, insbesondere automatisches Erfassen, einer gegenwärtigen Rasenhöhe des Rasens. Beim nächsten Ausführen des Verfahrens erfolgt das Ermitteln der zukünftigen Rasenhöhe des Rasens mittels des Rasenwachstumsmodells basierend auf der erfassten gegenwärtigen Rasenhöhe. Dies kann eine Art Feedback zur Verbesserung des Rasenwachstumsmodells darstellen. Das Erfassen der gegenwärtigen Rasenhöhe des Rasens kann mittels eines Sensors erfolgen, insbesondere mittels eines Rasenhöhensensors, den vorteilhafterweise der autonome mobile Rasenmähroboter umfassen kann. Zusätzlich oder alternativ kann das Erfassen der gegenwärtigen Rasenhöhe des Rasens mittels einer Messung der aktuellen Leistungsaufnahme eines Antriebsmotors des Schneidwerkzeugs beim Mähen erfolgen, wobei aus der Leistungsaufnahme die gegenwärtige Rasenhöhe ermittelt werden kann.

In einer Weiterbildung der Erfindung weist das Verfahren einen Schritt c) auf: Ausgeben der eingestellten Schnitthöhe des Schneidwerkzeugs und/oder des umweltzustandsbeschreibenden Parameters. Dies kann dem Benutzer ermöglichen das Verfahren zu kontrollieren und/oder zu überwachen und/oder zu überprüfen. Das Ausgeben kann akustisch, haptisch und/oder optisch erfolgen. Der Schritt c) kann zeitgleich mit dem Schritt b) und/oder zeitlich nach diesem ausgeführt werden.

In einer Weiterbildung der Erfindung weist das Verfahren einen Schritt d) auf: Freigeben der eingestellten Schnitthöhe des Schneidwerkzeugs zum Bearbeiten und/oder Korrigieren und/oder Verstellen. Der Schritt d) kann zeitgleich mit dem Schritt b) und/oder zeitlich nach diesem ausgeführt werden.

In einer Weiterbildung der Erfindung weist das Verfahren einen Schritt e) auf: Mähen, insbesondere autonomes Mähen, des Rasens mittels des autonomen mobilen Rasenmähroboters mit seinem schnitthöheneingestellten Schneidwerkzeug. Vorteilhafterweise kann das Mähen des Rasens zeitlich unmittelbar nach dem automatischen Einstellen der Schnitthöhe und/oder vor dem Eintreten des Zeitpunkts der Vorhersage erfolgen. Das Mähen des Rasens kann mittels eines Mähzeitplans festgelegt und/oder geplant werden oder sein, insbesondere kann ein Mähen in regelmäßigen zeitlichen Abständen erfolgen. Der Mähzeitplan kann an bestimmten Stunden eines Tages, insbesondere während einer Schlafenszeit und/oder während einer Mittagsruhe, eine mähfreie Pause vorsehen. Vorteilhafterweise kann die Rasenhöhe nach dem Mähen der eingestellten Schnitthöhe entsprechen. Der Mähzeitplan kann in Abhängigkeit der Vorhersage angepasst und/oder modifiziert werden. Der Schritt e) kann zeitgleich mit dem Schritt b) und/oder zeitlich nach diesem ausgeführt werden.

In einer Ausgestaltung der Erfindung kann, insbesondere bei einer relativ hohen gegenwärtigen Rasenhöhe des Rasens, die Schnitthöhe des Schneidwerkzeugs erstens beziehungsweise in einem ersten Schritt oder einer ersten Stufe relativ hoch eingestellt werden und der Rasen mittels des Rasenmähroboters mit seinem relativ hoch eingestellten Schneidwerkzeug gemäht werden. In einem zweiten Schritt oder in einer zweiten Stufe beziehungsweise zeitlich danach kann die Schnitthöhe des Schneidwerkzeugs relativ niedriger eingestellt werden, insbesondere auf eine gewünschte Höhe, und der Rasen mittels des Rasenmähroboters mit seinem relativ niedriger eingestellten Schneidwerkzeug gemäht werden. Optional kann dieses Verfahren mit mindestens einem weiteren Schritt oder einer weiteren Stufe fortgesetzt werden, insbesondere bis die gewünschte Höhe erreicht ist. Diese mehrstufige Schnitthöhenverstellung ermöglicht, dass keine relativ langen Grashalme auf dem Rasen beziehungsweise der Fläche liegen blieben. Dies kann als Hochgrasmähfunktion bezeichnet werden. Die relativ hohe gegenwärtige Rasenhöhe kann erfasst werden, insbesondere wie zuvor beschrieben. Insbesondere können verschiedene Rasenhöhen in verschiedenen Bereichen oder Abschnitten des Rasens erfasst werden und für die verschiedenen Bereiche kann die Schnitthöheneinstellung in verschiedenen Anzahlen an Stufen erfolgen. Insbesondere können/kann der Rasenmähroboter und/oder ein Rasenmähsystem mindestens ein Positionsbestimmungsgerät zur Positionsbestimmung des Rasenmähroboters auf dem Rasen oder seinen Bereichen aufweisen. Zusätzlich oder alternativ kann eine Zeitspanne seit einem letzten Mähen des Rasens erfasst werden, und bei Erreichen und/oder Überschreiten der Zeitspanne von einer Zeitspannengrenze kann davon ausgegangen werden, dass die gegenwärtige Rasenhöhe relativ hoch ist. Beispielsweise bei längerem Stillstand wegen eines Service und/oder eines Defekts des Rasenmähroboters. Weiter zusätzlich oder alternativ kann ein gegenwärtiger Zeitpunkt, insbesondere ein Tag, eine Woche und/oder ein Monat, erfasst werden, und wenn der Zeitpunkt innerhalb eines bestimmten Zeitfensters liegt kann davon ausgegangen werden, dass die gegenwärtige Rasenhöhe relativ hoch ist. Beispielsweise am Anfang des Jahres.

In einer Weiterbildung der Erfindung weist das Verfahren einen Schritt auf: Vorgeben einer mittleren Rasenhöhe des Rasens. Zeitgleich und/oder zeitlich danach umfasst der Schritt b): automatisches Einstellen der Schnitthöhe des Schneidwerkzeugs in Abhängigkeit von der vorgegebenen mittleren Rasenhöhe. Die mittlere Rasenhöhe des Rasens kann eine Rasenhöhe sein, die der Benutzer im zeitlichen Mittel wünscht.

Des Weiteren bezieht sich die Erfindung auf ein Rasenmähsystem, insbesondere zum Ausführen des zuvor beschriebenen Verfahrens. Das erfindungsgemäße Rasenmähsystem weist eine Empfangseinheit, den autonomen mobilen Rasenmähroboter und eine Höhenverstelleinrichtung auf. Die Empfangseinheit ist dazu ausgebildet, die Vorhersage des umweltzustandsbeschreibenden Parameters zu empfangen und/oder abzurufen. Der autonome mobile Rasenmähroboter weist das Schneidwerkzeug zum Mähen des Rasens auf, wobei die Schnitthöhe des Schneidwerkzeugs einstellbar ist. Die Höhenverstelleinrichtung ist dazu ausgebildet, mit der Empfangseinheit zusammenwirken und die Schnitthöhe des Schneidwerkzeugs in Abhängigkeit von der empfangenen Vorhersage automatisch einzustellen.

Das Rasenmähsystem ermöglicht die Schnitthöhe des Schneidwerkzeugs bereits vor dem Eintreten eines zukünftigen Umweltzustands in Abhängigkeit von der empfangenen Vorhersage einzustellen. Das Rasenmähsystem kann es ermöglichen, eine Auswirkung des zukünftigen Umweltzustands auf den Rasen bereits in der Gegenwart zu berücksichtigen und optional zu kompensieren, indem die Schnitthöhe des Schneidwerkzeugs in Abhängigkeit von der empfangenen Vorhersage des umweltzustandsbeschreibenden Parameters eingestellt wird.

Vorteilhafterweise kann die Schnitthöhe des Schneidwerkzeugs stufenlos oder in relativ kleinen Schritten, insbesondere in 0,5 cm-Schritten, einstellbar sein. Die Empfangseinheit kann dazu ausgebildet sein, die Vergangenheit des umweltzustandsbeschreibenden Parameters und/oder die Gegenwart des umweltzustandsbeschreibenden Parameters zu empfangen und/oder abzurufen. Die Höhenverstelleinrichtung kann dazu ausgebildet sein, die Schnitthöhe des Schneidwerkzeugs in Abhängigkeit von der empfangenen Vergangenheit und/oder von der empfangenen Gegenwart automatisch einzustellen. Insbesondere kann der autonome mobile Rasenmähroboter die Empfangseinheit und/oder die Höhenverstelleinrichtung umfassen.

In einer Weiterbildung der Erfindung weist das Rasenmähsystem eine Recheneinheit auf. Die Recheneinheit ist dazu ausgebildet, die zukünftige Rasenhöhe des Rasens basierend auf dem umweltzustandsbeschreibenden Parameter mittels des Rasenwachstumsmodells zu ermitteln. Die Höhenverstelleinrichtung ist dazu ausgebildet, die Schnitthöhe des Schneidwerkzeugs in Abhängigkeit von der ermittelten zukünftigen Rasenhöhe automatisch einzustellen. Vorteilhafterweise kann die Recheneinheit ein Computer, ein Smartphone, ein Tablet und/oder ein Mikrochip sein. Der autonome mobile Rasenmähroboter kann die Recheneinheit umfassen. Insbesondere kann die Höhenverstelleinrichtung dazu ausgebildet sein, mit der Recheneinheit zusammenzuwirken.

In einer Weiterbildung der Erfindung weist das Rasenmähsystem ein Ausgabegerät auf. Das Ausgabegerät ist dazu ausgebildet, die eingestellte Schnitthöhe des Schneidwerkzeugs und/oder den umweltzustandsbeschreibenden Parameter auszugeben. Vorteilhafterweise kann das Ausgabegerät einen Lautsprecher und/oder einen Bildschirm aufweisen. Insbesondere kann der autonome mobile Rasenmähroboter das Ausgabegerät umfassen.

In einer Weiterbildung der Erfindung weist das Rasenmähsystem ein Eingabegerät auf. Das Eingabegerät ist dazu ausgebildet, die eingestellte Schnitthöhe des Schneidwerkzeugs zu bearbeiten und/oder zu korrigieren und/oder zu verstellen. Vorteilhafterweise kann das Eingabegerät eine Gestenerkennung, eine Spracherkennung und/oder eine Tastatur umfassen. Insbesondere können das Ausgabegerät und das Eingabegerät miteinander verbunden ausgebildet sein, insbesondere einen gemeinsamen Touchscreen umfassen. Das Bearbeiten der eingestellten Schnitthöhe kann mittels des Eingabegeräts durch einen Benutzer erfolgen. Insbesondere kann die Höhenverstelleinrichtung dazu ausgebildet sein, mit dem Eingabegerät zusammenzuwirken. Zusätzlich oder alternativ kann das Eingabegerät dazu ausgebildet sein, die mittlere Rasenhöhe des Rasens vorzugeben. Die Höhenverstelleinrichtung kann dazu ausgebildet sein, die Schnitthöhe des Schneidwerkzeugs in Abhängigkeit von der vorgegebenen mittleren Rasenhöhe automatisch einzustellen.

In einer Weiterbildung der Erfindung weist die Empfangseinheit eine Schnittstelle zum Anschließen der Empfangseinheit an ein Netzwerk auf, insbesondere an ein Datennetzwerk wie das Internet. Vorteilhafterweise kann die Schnittstelle dazu ausgebildet sein, eine Datenverbindung zu einem den umweltzustandsbeschreibenden Parameter bereitstellenden Dienst herzustellen. Die Schnittstelle kann eine Datenschnittstelle sein, insbesondere eine UMTS-, WLAN-, und/oder Bluetooth-Schnittstelle.

In einer Weiterbildung der Erfindung ist die Schnitthöhe des Schneidwerkzeugs in einem Bereich von 0 bis 15 cm einstellbar, insbesondere in einem Bereich von 2 cm bis 10 cm.

### KURZBESCHREIBUNG DER ZEICHNUNGEN

Weitere Vorteile und Aspekte der Erfindung ergeben sich aus den Ansprüchen und aus der nachfolgenden Beschreibung von bevorzugten Ausführungsbeispielen der Erfindung, die nachfolgend anhand der Figuren erläutert sind. Dabei zeigen:
- Fig. 1: ein Ablaufdiagramm eines erfindungsgemäßen Verfahrens,
- Fig. 2: eine teilweise geschnittene Seitenansicht eines autonomen mobilen Rasenmähroboters eines erfindungsgemäßen Rasenmähsystems,
- Fig. 3: eine Draufsicht auf den Rasenmähroboter von Fig. 2 und
- Fig.4: eine Draufsicht auf eines mittels des erfindungsgemäßen Rasenmähsystems zu bearbeitende Fläche.

### DETAILLIERTE BESCHREIBUNG DER AUSFÜHRUNGSBEISPIELE

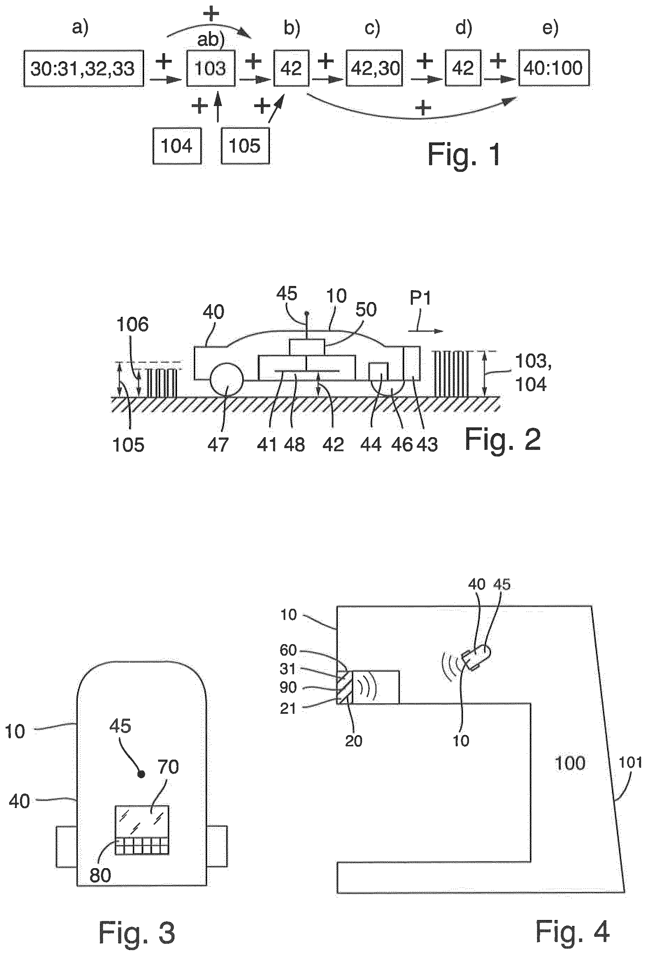

Fig. 2 bis 4 zeigen ein erfindungsgemäßes Rasenmähsystem 10. Das Rasenmähsystem 10 weist eine Empfangseinheit 20, einen autonomen mobilen Rasenmähroboter 40 und eine Höhenverstelleinrichtung 50 auf. Die Empfangseinheit 20 ist dazu ausgebildet, eine Vorhersage 31 eines umweltzustandsbeschreibenden Parameters 30 zu empfangen. Der Rasenmähroboter 40 weist ein Schneidwerkzeug 41 zum Mähen eines Rasens 100 auf, wobei eine Schnitthöhe 42 des Schneidwerkzeugs 41 einstellbar ist, wie in Fig. 2 zu erkennen. Die Höhenverstelleinrichtung 50 ist dazu ausgebildet, mit der Empfangseinheit 20 zusammenwirken und die Schnitthöhe 42 in Abhängigkeit von der empfangenen Vorhersage 31 automatisch einzustellen. Im gezeigten Ausführungsbeispiel umfasst der Rasenmähroboter 40 die Höhenverstelleinrichtung 50. In alternativen Ausführungsbeispielen kann die Höhenverstelleinrichtung getrennt von dem Rasenmähroboter ausgebildet und irgendwo auf dem Rasen beziehungsweise am Rasen angeordnet sein. Der Rasenmähroboter kann sich zum Einstellen der Schnitthöhe seines Schneidwerkzeugs zur Höhenverstelleinrichtung bewegen beziehungsweise begeben.

Das Rasenmähsystem 10 ermöglicht die Schnitthöhe 42 des Schneidwerkzeugs 41 bereits vor dem Eintreten eines zukünftigen Umweltzustands in Abhängigkeit von der empfangenen Vorhersage 31 einzustellen und eine Auswirkung des zukünftigen Umweltzustands auf den Rasen 100 bereits in der Gegenwart zu berücksichtigen und zu kompensieren.

Das Rasenmähsystem 10 ist zum Ausführen eines in Fig. 1 gezeigten erfindungsgemäßen Verfahrens ausgebildet beziehungsweise das Verfahren ist zum Betreiben des autonomen mobilen Rasenmähroboters 40 mit seinem schnitthöheneinstellbaren Schneidwerkzeug 41 ausgebildet. Das Verfahren weist die Schritte auf: a) Empfangen der Vorhersage 31 des umweltzustandsbeschreibenden Parameters 30. b) automatisches Einstellen der Schnitthöhe 42 des Schneidwerkzeugs 41 in Abhängigkeit von der empfangenen Vorhersage 31.

Das Verfahren ermöglicht die Schnitthöhe 42 des Schneidwerkzeugs 41 bereits vor dem Eintreten des zukünftigen Umweltzustands in Abhängigkeit von der empfangenen Vorhersage 31 einzustellen und eine Auswirkung des zukünftigen Umweltzustands auf den Rasen 100 bereits in der Gegenwart zu berücksichtigen und zu kompensieren.

Im Detail weist der autonome mobile Rasenmähroboter 40 vordere Laufräder 46, die schwenkbar sind, und hintere Laufräder 47 auf, die getrennt voneinander angetrieben sind. Somit kann sich der Rasenmähroboter 40 auf dem Rasen 100 selbstständig bewegen und lenken. Weiterhin weist der Rasenmähroboter 40 einen nicht dargestellten Elektromotor zum Antrieb des Schneidwerkzeugs 41 auf. In alternativen Ausführungsbeispielen kann der Rasenmähroboter einen Verbrennungsmotor, insbesondere einen Benzinmotor, zum Antrieb des Schneidwerkzeugs aufweisen. Zudem weist der Rasenmähroboter 40 einen nicht dargestellten Akkumulator zur Antriebsenergieversorgung der hinteren Räder 47 und des Elektromotors zum Antrieb des Schneidwerkszeugs 41 auf. In alternativen Ausführungsbeispielen kann der Rasenmähroboter eine Brennstoffzelle oder einer andere Art einer Antriebsenergiequelle zur Antriebsenergieversorgung aufweisen.

Im gezeigten Ausführungsbeispiel umfasst das Schneidwerkzeug 41 ein Metallschneideblatt mit drei Schneidezähnen. In alternativen Ausführungsbeispielen kann das Schneidwerkzeug nur einen einzigen Schneidezahn, zwei oder mehr als drei Schneidezähne umfassen. Das Schneidwerkzeug 41 ist als ein rotierendes Schneidwerkzeug und dazu ausgebildet, den Rasen 100 im Freischnittverfahren zu bearbeiten, insbesondere durch Zentrifugalkraft des Schneidwerkzeugs 41 einen Schneidvorgang zu erzeugen. Insbesondere ist der Rasenmähroboter 40 als ein Mulchmähroboter ausgebildet.

Das rotierende Schneidwerkzeug 41 definiert eine Schnittebene 48, die parallel zu einem Untergrund verläuft, auf dem sich der Rasenmähroboter 40 bewegt. Die Schnitthöhe 42 des Schneidwerkzeugs 41 ist eine vertikale beziehungsweise senkrechte Distanz zwischen der Schnittebene 48 und dem Untergrund beziehungsweise einer durch die Laufräder 46, 47 definierten Laufebene. Im Detail ist die Schnitthöhe 42 in einem Bereich von 2 cm bis 10 cm stufenlos einstellbar.

Im gezeigten Ausführungsbeispiel umfasst der umweltzustandsbeschreibende Parameter 30 einen meteorologischen Parameter, insbesondere Regen und Sonnenschein, und beschreibt somit für ein Wachstum des Rasens 100 relevante Umweltzustände. Die Vorhersage 31 kann als Wettervorhersage bezeichnet werden. Die Vorhersage sagt den Umweltzustand 24 Stunden im Voraus vorher und beschreibt wiederum einen Zeitraum von 24 Stunden. Die Empfangseinheit 20 ist dazu ausgebildet, die Vorhersage 31 des umweltzustandsbeschreibenden Parameters 30 stündlich aus dem Internet automatisch abzurufen. In anderen Worten: der Schritt a) wird stündlich wiederholt. Somit besteht genügend Zeit, auf die Vorhersage zu reagieren, insbesondere im Schritt b) die Schnitthöhe 42 in Abhängigkeit von der empfangenen Vorhersage 31 automatisch einzustellen, insbesondere mittels der Höhenverstelleinrichtung 50. Im Detail weist die Empfangseinheit 20 eine Schnittstelle 21 in Form einer UMTS-Schnittstelle zum Anschließen der Empfangseinheit 20 an das Internet und zur Herstellung einer Datenverbindung mit einem Wetterdienst auf.

Das Einstellen der Schnitthöhe 42 des Schneidwerkzeugs 41 in Abhängigkeit von der empfangenen Vorhersage 31 des umweltzustandsbeschreibenden Parameters 30 ist wie folgt: Wenn Regen vorhergesagt ist, wird davon ausgegangen, dass der Rasen 100 im Regen und nach dem Regen im Sonnenschein nicht austrocknen, sondern verstärkt wachsen wird. Deshalb wird bei Regen-Vorhersage automatisch die Schnitthöhe 42 relativ niedrig eingestellt und der Rasen 100 vor dem Regen mittels des autonomen mobilen Rasenmähroboters 40 mit seinem niedrig eingestellten Schneidwerkzeug 41 in einem Schritt e) des Verfahrens gemäht, wie in Fig. 1, 2 und 4 zu erkennen. Wenn Sonnenschein vorhergesagt ist, muss der Rasen 100 davor geschützt werden, nicht auszutrocknen. Deshalb wird bei Sonnenschein-Vorhersage automatisch die Schnitthöhe 42 relativ hoch eingestellt und der Rasen 100 mittels des Rasenmähroboters 40 mit seinem hoch eingestellten Schneidwerkzeug 41 im Schritt e) gemäht. In Fig. 2 bewegt sich der Rasenmähroboter 40 von links nach rechts, wie durch den Pfeil P1 angedeutet. Nach dem Mähen entspricht eine Rasenhöhe 106 des Rasens 100 der eingestellten Schnitthöhe 42, wie in Fig. 2 links zu erkennen.

Zusätzlich wird im Schritt a) eine Gegenwart 32 und eine Vergangenheit 33 des umweltzustandsbeschreibenden Parameters 30 empfangen, insbesondere mittels der Empfangseinheit 20. Zusätzlich wird im Schritt b) beim automatischen Einstellen der Schnitthöhe 42 des Schneidwerkzeugs 41 die Gegenwart 32 und die Vergangenheit 33 des umweltzustandsbeschreibenden Parameters 30 berücksichtigt, insbesondere mittels der Höhenverstelleinrichtung 50. Wenn Sonnenschein vorhergesagt ist und aktuell die Sonne scheint, ist die Gefahr relativ groß, dass der Rasen 100 austrocknet. Es kann weniger davon ausgegangen werden, dass der Rasen 100 verstärkt wachsen wird. In diesem Fall wird die Schnitthöhe 42 automatisch relativ hoch eingestellt. Wenn Sonnenschein vorhergesagt ist und es aktuell regnet, ist die Gefahr des Austrocknens relativ niedrig. Eher kann davon ausgegangen werden, dass der Rasen 100 nach dem Regen im Sonnenschein erstmals wachsen wird. In diesem Fall wird die Schnitthöhe 42 automatisch nicht ganz so hoch eingestellt.

Des Weiteren weist das Rasenmähsystem 10 eine Recheneinheit 60 auf. Die Recheneinheit 60 ist dazu ausgebildet, eine zukünftige Rasenhöhe 103 des Rasens 100 basierend auf dem umweltzustandsbeschreibenden Parameter 30 mittels eines Rasenwachstumsmodells automatisch zu ermitteln. Die Höhenverstelleinrichtung 50 ist dazu ausgebildet, die Schnitthöhe 42 des Schneidwerkzeugs 41 in Abhängigkeit von der ermittelten zukünftigen Rasenhöhe 103 automatisch einzustellen. Die Höhenverstelleinrichtung 50 ist dazu ausgebildet, mit der Recheneinheit 60 zusammenzuwirken. Die Empfangseinheit 20 ist dazu ausgebildet, mit der Recheneinheit 60 zusammenzuwirken.

Die zukünftige Rasenhöhe 103 ist eine Rasenhöhe, die der Rasen 100 in den kommenden drei oder fünf Tagen voraussichtlich erreichen wird.

Entsprechend weist das das Verfahren einen Schritt ab) auf: automatisches Ermitteln der zukünftigen Rasenhöhe 103 des Rasens 100 basierend auf dem umweltzustandsbeschreibenden Parameter 30 mittels des Rasenwachstumsmodells. Der Schritt b) umfasst: automatisches Einstellen der Schnitthöhe 42 des Schneidwerkzeugs 41 in Abhängigkeit von der ermittelten zukünftigen Rasenhöhe 103.

Außerdem weist das Rasenmähsystem 10, insbesondere dessen Rasenmähroboter 40, einen Rasenhöhensensor 43 auf, wie in Fig. 2 rechts zu erkennen. Der Rasenhöhensensor 43 ist zum automatischen Erfassen einer gegenwärtigen Rasenhöhe 104 des Rasens 100 ausgebildet. Die Recheneinheit 60 ist dazu ausgebildet, beim nächsten Ausführen des Verfahrens die zukünftige Rasenhöhe 103 des Rasens 100 mittels des Rasenwachstumsmodells basierend auf der erfassten gegenwärtigen Rasenhöhe 104 automatisch zu ermitteln. Der Rasenhöhensensor 43 ist dazu ausgebildet, mit der Recheneinheit 60 zusammenzuwirken.

Entsprechend weist das Verfahren einen Schritt auf: automatisches Erfassen der gegenwärtigen Rasenhöhe 104 des Rasens 100. Beim nächsten Ausführen des Verfahrens erfolgt das automatische Ermitteln der zukünftigen Rasenhöhe 103 des Rasens 100 mittels des Rasenwachstumsmodells basierend auf der erfassten gegenwärtigen Rasenhöhe 104.

Im Detail ist die Recheneinheit 60 dazu ausgebildet, die ermittelte zukünftige Rasenhöhe 103 zu speichern und zu dem Zeitpunkt, für den eine Rasenhöhe ermittelt wurde, mit der dann tatsächlichen gegenwärtigen Rasenhöhe 104 zu vergleichen. Des Weiteren ist die Recheneinheit 60 dazu ausgebildet, das Rasenwachstumsmodell basierend auf einem Vergleichsergebnis anzupassen beziehungsweise zu verbessern.

Entsprechend umfasst der Schritt ab), Speichern der ermittelten zukünftigen Rasenhöhe 103, Vergleichen der gespeicherten zukünftigen Rasenhöhe 103 mit der gegenwärtigen Rasenhöhe 104 und Anpassen des Rasenwachstumsmodells basierend auf einem Vergleichsergebnis.

Im gezeigten Ausführungsbeispiel ist das Rasenwachstumsmodell bereits optimiert und die gegenwärtige Rasenhöhe 104 ist in der Vergangenheit durch die zukünftige Rasenhöhe 103 korrekt ermittelt worden, wie in Fig. 2 rechts zu erkennen.

Aus Gründen der besseren Übersichtlichkeit ist in Fig. 2 im Bereich des Rasenmähroboters 40 kein Rasen dargestellt. Tatsächlich müsste in Fig. 2 von rechts nach links bis zum Schneidwerkzeug 41 der ungemähte Rasen die Rasenhöhe 103, 104 haben und weiter nach links der gemähte Rasen die Rasenhöhe 106 haben.

Weiter weist das Rasenmähsystem 10 ein Ausgabegerät 70 in Form eines Bildschirms auf, wie in Fig. 3 zu erkennen. Das Ausgabegerät 70 ist dazu ausgebildet, die eingestellte Schnitthöhe 42 des Schneidwerkzeugs 41 und den umweltzustandsbeschreibenden Parameter 30 auszugeben. Das Ausgabegerät 70 ist dazu ausgebildet, mit der Empfangseinheit 20, der Höhenverstelleinrichtung 50 und der Recheneinheit 60 zusammenzuwirken. Im gezeigten Ausführungsbeispiel umfasst der autonome mobile Rasenmähroboter 40 das Ausgabegerät 70.

Entsprechend weist das Verfahren einen Schritt c) auf: Ausgeben, insbesondere optisches, der eingestellten Schnitthöhe 42 und des umweltzustandsbeschreibenden Parameters 30.

Zudem weist das Rasenmähsystem 10 ein Eingabegerät 80 in Form einer Tastatur auf. Das Eingabegerät 80 ist dazu ausgebildet, die eingestellte Schnitthöhe 42 des Schneidwerkzeugs 41 zu bearbeiten. Zusätzlich ist das Eingabegerät 80 dazu ausgebildet, eine mittlere Rasenhöhe 105 des Rasens 100 vorzugeben. Die Höhenverstelleinrichtung 50 ist dazu ausgebildet, die Schnitthöhe 42 in Abhängigkeit von der Bearbeitung und von der vorgegebenen mittleren Rasenhöhe 105 automatisch einzustellen. Das Eingabegerät 80 ist dazu ausgebildet, mit der Höhenverstelleinrichtung 50, der Recheneinheit 60 und dem Ausgabegerät 70 zusammenzuwirken. Im gezeigten Ausführungsbeispiel umfasst der autonome mobile Rasenmähroboter 40 das Eingabegerät 80.

Um die vorgegebene mittlere Rasenhöhe 105 zu erreichen, wird die Schnitthöhe 42 derart eingestellt, dass die Rasenhöhe 106 nach dem Mähen und die zukünftige Rasenhöhe 103 bis zum nächsten Mähen im Mittel die mittlere Rasenhöhe 105 ergeben, wie in Fig. 2 zu erkennen.

Entsprechend weist das Verfahren einen Schritt d) auf: Freigeben der eingestellten Schnitthöhe 42 des Schneidwerkzeugs 41 zum Bearbeiten.

Des Weiteren weist das Verfahren einen Schritt auf: Vorgeben der mittleren Rasenhöhe 105 des Rasens 100. Der Schritt b) umfasst: automatisches Einstellen der Schnitthöhe 42 in Abhängigkeit von der vorgegebenen mittleren Rasenhöhe 105. Im gezeigten Ausführungsbeispiel wird die vorgegebene mittlere Rasenhöhe 105 im Schritt ab) mittels des Rasenwachstumsmodells berücksichtigt, insbesondere mittels der Recheneinheit 60.

Außerdem weist das Rasenmähsystem 10 eine Basisstation 90 für den autonomen mobilen Rasenmähroboter 40 auf, die hier an einem Begrenzungsrand 101 des Rasens 100 angeordnet ist, wie in Fig. 6 links oben zu erkennen. Im gezeigten Ausführungsbeispiel ist die Basisstation 90 als eine Ladestation zum Wiederaufladen, insbesondere zum automatischen, des Akkumulators des Rasenmähroboters 40 ausgebildet.

Im gezeigten Ausführungsbeispiel umfasst die Basisstation 90 die Empfangseinheit 20. In alternativen Ausführungsbeispielen kann die Empfangseinheit woanders angeordnet sein, insbesondere kann der autonome mobile Rasenmähroboter die Empfangseinheit umfassen. Des Weiteren umfasst im gezeigten Ausführungsbeispiel die Basisstation 90 die Recheneinheit 60. In alternativen Ausführungsbeispielen kann die Recheneinheit woanders angeordnet sein, insbesondere kann der autonome mobile Rasenmähroboter die Recheneinheit umfassen.

Der autonome mobile Rasenmähroboter 40 weist eine drahtlose und/oder kabellose Roboterübertragungseinheit 45 auf. Die Basisstation 90 weist eine drahtlose und/oder kabellose Basisübertragungseinheit 91 auf. Die Roboterübertragungseinheit 45 und die Basisübertragungseinheit 91 sind zum Zusammenwirken miteinander und zur drahtlosen Datenübertragung ausgebildet. Somit ist oder wird das Zusammenwirken der Empfangseinheit 20 und der Recheneinheit 60 mit dem Rasenhöhensensor 43, der Höhenverstelleinrichtung 50, dem Ausgabegerät 70 und dem Eingabegerät 80 ermöglicht.

Weiter weist das Rasenmähsystem 10 einen Begrenzungsdraht und eine nicht dargestellte Stromquelle auf. Der Begrenzungsdraht umgibt den Rasen 100 und definiert den Begrenzungsrand 101. Die Stromquelle ist dazu ausgebildet, einen elektrischen Strom durch den Begrenzungsdraht fließen zu lassen, wobei der elektrische Strom ein abstandsabhängiges Magnetfeld in dem Rasen 100 erzeugen kann.

Der autonome mobile Rasenmähroboter 40 weist einen Magnetfeldsensor 44 auf. Der Magnetfeldsensor 44 ist dazu ausgebildet, das Magnetfeld und somit den Begrenzungsrand 101 zu erkennen. Der Rasenmähroboter 40 ist dazu ausgebildet, seine Bewegung auf dem Rasen 100, insbesondere in Abhängigkeit von einer Erkennung des Begrenzungsrands 101, derart zu steuern, dass er auf dem Rasen 100 bleibt, insbesondere innerhalb des Begrenzungsrands 101.

Wie die gezeigten und oben erläuterten Ausführungsbeispiele deutlich machen, stellt die Erfindung ein vorteilhaftes Verfahren und ein vorteilhaftes Rasenmähsystem bereit, wobei das Verfahren und das Rasenmähsystem verbesserte Eigenschaften aufweisen, insbesondere mehr Funktionalitäten. Insbesondere ermöglichen das Verfahren und das Rasenmähsystem, die Schnitthöhe des Schneidwerkzeugs bereits vor dem Eintreten eines zukünftigen Umweltzustands in Abhängigkeit von der empfangenen Vorhersage einzustellen und eine Auswirkung des zukünftigen Umweltzustands auf den Rasen bereits in der Gegenwart zu berücksichtigen und zu kompensieren.

## Patentansprüche

1. Verfahren zum Betreiben eines autonomen mobilen Rasenmähroboters (40) mit einem Schneidwerkzeug (41) zum Mähen eines Rasens (100), wobei eine Schnitthöhe (42) des Schneidwerkzeugs einstellbar ist, aufweisend die Schritte:
a) Empfangen einer Vorhersage (31) eines umweltzustandsbeschreibenden Parameters (30) und
b) automatisches Einstellen der Schnitthöhe (42) des Schneidwerkzeugs (41) in Abhängigkeit von der empfangenen Vorhersage.

2. Verfahren nach Anspruch 1,
- wobei der umweltzustandsbeschreibende Parameter (30) einen meteorologischen Parameter umfasst, insbesondere eine Lufttemperatur, eine Luftfeuchtigkeit, einen Taupunkt, einen Luftdruck, eine Luftdichte, eine Luftzusammensetzung, eine Windrichtung, eine Windgeschwindigkeit, eine Niederschlagsart, eine Niederschlagsmenge, eine Bewölkung, eine Sichtweite, eine Globalstrahlung, eine Albedo und/oder eine Jahreszeit.

3. Verfahren nach Anspruch 1 oder 2,
- wobei das Verfahren einen Schritt aufweist: Empfangen einer Vergangenheit (33) des umweltzustandsbeschreibenden Parameters (30) und/oder einer Gegenwart (32) des umweltzustandsbeschreibenden Parameters und
- wobei der Schritt b) umfasst: automatisches Einstellen der Schnitthöhe (42) des Schneidwerkzeugs (41) in Abhängigkeit von der empfangenen Vergangenheit und/oder von der empfangenen Gegenwart.

4. Verfahren nach einem der vorhergehenden Ansprüche,
- wobei das Verfahren einen Schritt ab) aufweist: Ermitteln einer zukünftigen Rasenhöhe (103) des Rasens (100) basierend auf dem umweltzustandsbeschreibenden Parameter (30) mittels eines Rasenwachstumsmodells und
- wobei der Schritt b) umfasst: automatisches Einstellen der Schnitthöhe (42) des Schneidwerkzeugs (41) in Abhängigkeit von der ermittelten zukünftigen Rasenhöhe.

5. Verfahren nach Anspruch 4,
- wobei das Verfahren einen Schritt aufweist: Erfassen einer gegenwärtigen Rasenhöhe (104) des Rasens (100) und
- beim nächsten Ausführen des Verfahrens Ermitteln der zukünftigen Rasenhöhe (103) des Rasens mittels des Rasenwachstumsmodells basierend auf der erfassten gegenwärtigen Rasenhöhe.

6. Verfahren nach einem der vorhergehenden Ansprüche,
- wobei das Verfahren einen Schritt c) aufweist: Ausgeben der eingestellten Schnitthöhe (42) des Schneidwerkzeugs (41) und/oder des umweltzustandsbeschreibenden Parameters (30).

7. Verfahren nach einem der vorhergehenden Ansprüche
- wobei das Verfahren einen Schritt d) aufweist: Freigeben der eingestellten Schnitthöhe (42) des Schneidwerkzeugs (41) zum Bearbeiten.

8. Verfahren nach einem der vorhergehenden Ansprüche,
- wobei das Verfahren einen Schritt e) aufweist: Mähen des Rasens (100) mittels des autonomen mobilen Rasenmähroboters (40) mit seinem schnitthöheneingestellten Schneidwerkzeug (41).

9. Verfahren nach einem der vorhergehenden Ansprüche,
- wobei das Verfahren einen Schritt aufweist: Vorgeben einer mittleren Rasenhöhe (105) des Rasens (100) und
- wobei der Schritt b) umfasst: automatisches Einstellen der Schnitthöhe (42) des Schneidwerkzeugs (41) in Abhängigkeit von der vorgegebenen mittleren Rasenhöhe.

10. Rasenmähsystem (10), insbesondere zum Ausführen des Verfahrens nach einem der vorhergehenden Ansprüche, aufweisend:
- eine Empfangseinheit (20), wobei die Empfangseinheit dazu ausgebildet ist, eine Vorhersage (31) eines umweltzustandsbeschreibenden Parameters (30) zu empfangen,
- einen autonomen mobilen Rasenmähroboter (40) mit einem Schneidwerkzeug (41) zum Mähen eines Rasens (100), wobei eine Schnitthöhe (42) des Schneidwerkzeugs einstellbar ist, und
- eine Höhenverstelleinrichtung (50), **dadurch gekennzeichnet, dass** die Höhenverstelleinrichtung dazu ausgebildet ist, mit der Empfangseinheit zusammenzuwirken und die Schnitthöhe des Schneidwerkzeugs in Abhängigkeit von der empfangenen Vorhersage automatisch einzustellen.

11. Rasenmähsystem (10) nach Anspruch 10 aufweisend:
- eine Recheneinheit (60), wobei die Recheneinheit dazu ausgebildet ist, eine zukünftige Rasenhöhe (103) des Rasens (100) basierend auf dem umweltzustandsbeschreibenden Parameter (30) mittels eines Rasenwachstumsmodells zu ermitteln, und
- wobei die Höhenverstelleinrichtung (50) dazu ausgebildet ist, die Schnitthöhe (42) des Schneidwerkzeugs (41) in Abhängigkeit von der ermittelten zukünftigen Rasenhöhe automatisch einzustellen.

12. Rasenmähsystem (10) nach Anspruch 10 oder 11, aufweisend:
- ein Ausgabegerät (70), wobei das Ausgabegerät dazu ausgebildet ist, die eingestellte Schnitthöhe (42) des Schneidwerkzeugs (41) und/oder den umweltzustandsbeschreibenden Parameter (30) auszugeben.

13. Rasenmähsystem (10) nach einem der Ansprüche 10 bis 12, aufweisend:
- ein Eingabegerät (80), wobei das Eingabegerät dazu ausgebildet ist, die eingestellte Schnitthöhe (42) des Schneidwerkzeugs (41) zu bearbeiten.

14. Rasenmähsystem (10) nach einem der Ansprüche 10 bis 13,
- wobei die Empfangseinheit (20) eine Schnittstelle (21) zum Anschließen der Empfangseinheit an ein Netzwerk aufweist.

15. Rasenmähsystem (10) nach einem der Ansprüche 10 bis 14, wobei
- die Schnitthöhe (42) des Schneidwerkzeugs (41) in einem Bereich von 0 bis 15 cm einstellbar ist.

## Claims

1. Method for operating an autonomous mobile lawn mower robot (40) having a cutting tool (41) for mowing a lawn (100), wherein a cutting height (42) of the cutting tool is adjustable, comprising the steps:
a) receiving a prediction (31) of an environmental condition describing parameter (30) and
b) automatic adjusting of the cutting height (42) of the cutting tool (41) as a function of the received prediction.

2. Method according to claim 1,
- wherein the environmental condition describing parameter (30) comprises a meteorological parameter, in particular an air temperature, an air humidity, a dew point, an air pressure, an air density, an air composition, a wind direction, a wind velocity, a type of precipitation, an amount of precipitation, a cloudiness, a visibility, a global radiation, an albedo and/or a season of the year.

3. Method according to claim 1 or 2,
- wherein the method comprises a step: receiving a past value (33) of the environmental condition describing parameter (30) and/or a present value (32) of the environmental condition describing parameter (30), and
- wherein the step b) comprises: automatic adjusting of the cutting height (42) of the cutting tool (41) as a function of the received past value and/or of the received present value.

4. Method according to any of the preceding claims,
- wherein the method comprises a step ab): obtaining a future lawn height (103) of the lawn (100) based on the environmental condition describing parameter (30) using a lawn growth model, and
- wherein the step b) comprises: automatic adjusting of the cutting height (42) of the cutting tool (41) as a function of the obtained future lawn height.

5. Method according to claim 4,
- wherein the method comprises a step: identifying a present lawn height (104) of the lawn (100) and
- at the next carrying out of the method, obtaining the future lawn height (103) of the lawn using the lawn growth model based on the identified present lawn height.

6. Method according to any of the preceding claims,
- wherein the method comprises a step c): outputting the adjusted cutting height (42) of the cutting tool (41) and/or the environmental condition describing parameter (30).

7. Method according to any of the preceding claims,
- wherein the method comprises a step d): enabling the adjusted cutting height (42) of the cutting tool (41) for processing.

8. Method according to any of the preceding claims,
- wherein the method comprises a step e): mowing the lawn (100) using the autonomous mobile lawn mower robot (40) having its cutting tool (41) adjusted in cutting height.

9. Method according to any of the preceding claims,
- wherein the method comprises a step: predefining an average lawn height (105) of the lawn (100), and
- wherein the step b) comprises: automatic adjusting of the cutting height (42) of the cutting tool (41) as a function of the predefined average lawn height.

10. Lawn mowing system (10), in particular for carrying out the method according to any of the preceding claims, comprising:
- a receiver unit (20), wherein the receiver unit is configured to receive a prediction (31) of an environmental condition describing parameter (30),
- an autonomous mobile lawn mower robot (40) having a cutting tool (41) for mowing a lawn (100), wherein a cutting height (42) of the cutting tool is adjustable, and
- a height adjusting device (50), **characterized in that** the height adjusting device is configured to cooperate with the receiver unit and to automatically adjust the cutting height of the cutting tool as a function of the received prediction.

11. Lawn mowing system (10) according to claim 10, comprising:
- a computing unit (60), wherein the computing unit is configured to obtain a future lawn height (103) of the lawn (100) based on the environmental condition describing parameter (30) using a lawn growth model, and
- wherein the height adjusting device (50) is configured to automatically adjust the cutting height (42) of the cutting tool (41) as a function of the obtained future lawn height.

12. Lawn mowing system (10) according to claim 10 or 11, comprising:
- an output device (70), wherein the output device is configured to output the adjusted cutting height (42) of the cutting tool (41) and/or the environmental condition describing parameter (30).

13. Lawn mowing system (10) according to any of claims 10 to 12, comprising:
- an input device (80), wherein the input device is configured to process the adjusted cutting height (42) of the cutting tool (41).

14. Lawn mowing system (10) according to any of claims 10 to 13,
- wherein the receiver unit (20) has an interface (21) for connecting the receiver unit to a network.

15. Lawn mowing system (10) according to any of claims 10 to 14, wherein
- the cutting height (42) of the cutting tool (41) is adjustable in a range from 0 to 15 cm.

## Revendications

1. Procédé de fonctionnement d'un robot tondeur mobile et autonome (40) comportant un outil de coupe (41) destiné à tondre une pelouse (100), dans lequel une hauteur de coupe (42) de l'outil de coupe est réglable, comprenant les étapes suivantes :
a) réception d'une prédiction (31) d'un paramètre (30) décrivant un état de l'environnement ; et
b) réglage automatique de la hauteur de coupe (42) de l'outil de coupe (41) en fonction de la prédiction reçue.

2. Procédé selon la revendication 1,
- dans lequel le paramètre (30) décrivant un état de l'environnement comprend un paramètre météorologique, en particulier une température de l'air, une humidité de l'air, un point de rosée, une pression atmosphérique, une densité de l'air, une composition de l'air, une direction du vent, une vitesse du vent, un type de précipitation, une quantité de précipitation, une nébulosité, une visibilité, un rayonnement global, un albédo et/ou une saison.

3. Procédé selon la revendication 1 ou 2,
- dans lequel le procédé comprend une étape de : réception d'un passé (33) du paramètre (30) décrivant un état de l'environnement et/ou d'un présent (32) du paramètre décrivant un état de l'environnement et
- dans lequel l'étape b) comprend : le réglage automatique de la hauteur de coupe (42) de l'outil de coupe (41) en fonction du passé reçu et/ou du présent reçu.

4. Procédé selon l'une des revendications précédentes,
- dans lequel le procédé comprend une étape ab) de : détermination d'une hauteur de pelouse future (103) de la pelouse (100) sur la base du paramètre (30) décrivant un état de l'environnement au moyen d'un modèle de croissance de pelouse et
- dans lequel l'étape b) comprend : le réglage automatique de la hauteur de coupe (42) de l'outil de coupe (41) en fonction de la hauteur de pelouse future déterminée.

5. Procédé selon la revendication 4,
- dans lequel le procédé comprend une étape de : détection d'une hauteur de pelouse actuelle (104) de la pelouse (100) et
- lors de la mise en œuvre suivante du procédé, la détermination de la hauteur de pelouse future (103) de la pelouse au moyen du modèle de croissance de la pelouse sur la base de la hauteur de pelouse actuelle détectée.

6. Procédé selon l'une des revendications précédentes,
- dans lequel le procédé comprend une étape c) de : fourniture en sortie de la hauteur de coupe réglée (42) de l'outil de coupe (41) et/ou du paramètre (30) décrivant un état de l'environnement.

7. Procédé selon l'une des revendications précédentes,
- dans lequel le procédé comprend une étape d) de : déblocage de la hauteur de coupe réglée (42) de l'outil de coupe (41) à traiter.

8. Procédé selon l'une des revendications précédentes,
- dans lequel le procédé comprend une étape e) de : tonte de la pelouse (100) au moyen du robot tondeur mobile et autonome (40) à l'aide de son outil de coupe réglable en hauteur (41).

9. Procédé selon l'une des revendications précédentes,
- dans lequel le procédé comprend une étape de : prédéfinition d'une hauteur de pelouse moyenne (105) de la pelouse (100) et
- dans lequel l'étape b) comprend : le réglage automatique de la hauteur de coupe (42) de l'outil de coupe (41) en fonction de la hauteur de pelouse moyenne prédéfinie.

10. Système de tondeuse (10), notamment destiné à mettre en œuvre le procédé selon l'une des revendications précédentes, comportant :
- une unité de réception (20), dans lequel l'unité de réception est conçue pour recevoir une prédiction (31) d'un paramètre (30) décrivant un état de l'environnement,
- un robot tondeur mobile et autonome (40) comportant un outil de coupe (41) destiné à tondre une pelouse (100), dans lequel une hauteur de coupe (42) de l'outil de coupe est réglable, et
- un dispositif de réglage de hauteur (50), **caractérisé en ce que** le dispositif de réglage de hauteur est conçu pour coopérer avec l'unité de réception et pour régler automatiquement la hauteur de coupe de l'outil de coupe en fonction de la prévision reçue.

11. Système de tondeuse (10) selon la revendication 10, comportant :
- une unité de calcul (60), dans lequel l'unité de calcul est conçue pour déterminer une hauteur de pelouse future (103) de la pelouse (100) sur la base d'un paramètre (30) décrivant un état de l'environnement au moyen d'un modèle de croissance de pelouse, et
- dans lequel le dispositif de réglage de hauteur (50) est conçu pour régler automatiquement la hauteur de coupe (42) de l'outil de coupe (41) en fonction de la hauteur de pelouse future déterminée.

12. Système de tondeuse (10) selon la revendication 10 ou 11, comportant :
- un appareil de fourniture en sortie (70), dans lequel l'appareil de fourniture en sortie est conçu pour fournir en sortie la hauteur de coupe réglée (42) de l'outil de coupe (41) et/ou le paramètre (30) décrivant un état de l'environnement.

13. Système de tondeuse (10) selon l'une des revendications 10 à 12, comportant :
- un appareil de fourniture en entrée (80), dans lequel l'appareil de fourniture en entrée est conçu pour traiter la hauteur de coupe réglée (42) de l'outil de coupe (41).

14. Système de tondeuse (10) selon l'une des revendications 10 à 13,
- dans lequel l'unité de réception (20) comporte une interface (21) permettant de connecter l'unité de réception à un réseau.

15. Système de tondeuse (10) selon l'une des revendications 10 à 14, dans lequel
- la hauteur de coupe (42) de l'outil de coupe (41) est réglable dans une plage de 0 à 15 cm.
